# EUROPÄISCHE PATENTANMELDUNG

(11) **EP 1 967 425 A1**
(43) Veröffentlichungstag der Anmeldung: **10.09.2008**
(21) Anmeldenummer: 07123870.3
(22) Anmeldetag: 20.12.2007
(51) Int. Cl.: B60R 25/02, F16H 55/06

(54) **Motorisierte Lenkverrieglungsvorrichtung**

(30) Priorität: 09.03.2007 EP 07103896
(71) Anmelder: Valeo Sicherheitssysteme GmbH, 85253 Erdweg (DE)
(72) Erfinder: Otto, Andreas, 85253 Erdweg (DE); Montay, Jean-Philippe, 85253 Erdweg (DE); Laval, Anthony, 85253 Erdweg (DE); Schlentrich, Jörg, 85253 Erdweg (DE)
(74) Vertreter: Croonenbroek, Thomas Jakob

(57) **Zusammenfassung**

Die vorliegende Erfindung betrifft eine motorisierte Lenkverrieglungseinrichtung (1) für ein Kraftfahrzeug umfassend einen Sperrbolzen (5), der in eine entsprechende Ausnehmung an der Lenkspindel zur Verrieglung des Lenkrads eines Kraftfahrzeugs eingreifen kann und eine, einen Motor (9) umfassende Antriebseinheit (11) um den Sperrbolzen (5) zumindest aus einer die Lenkspindel blockierenden Verrieglungsstellung in eine nicht blockierende Ruhestellung zu überführen, wobei die Antriebseinheit Übertragungselemente aufweist, welche die Drehbewegung der Abtriebsachse des Motors in eine Translationsbewegung des Sperrbolzens umsetzen. Die Übertragungselemente sind zumindest an den jeweiligen Schnittstellen Abtriebsachse / Übertragungselement, Übertragungselement/ Übertragungselement oder Übertragungselement / Sperrbolzen (5) mit einer Gleitbeschichtung versehen.

## Beschreibung

Die Erfindung bezieht sich auf eine motorisierte Lenkverrieglungsvorrichtung für ein Kraftfahrzeug.

Zur Lenkverrieglung eines Kraftfahrzeuges sind in den letzten Jahren motorisierte Lenkverrieglungsvorrichtungen entwickelt worden, welche sich gegenüber den rein mechanischen Lenkradverrieglungen großer Beliebtheit erfreuen.

Wohingegen mechanische Lenkverrieglungen immer in der Nähe des Zündschlosses angebracht werden müssen, können motorisierte Lenkverrieglungen an beliebiger Stelle an der Lenksäule, z. B. in der Nähe des Fußraumes eines Fahrers angebracht werden.

Dies bietet nicht nur den Vorteil, dass der Bauraum um die Lenksäule herum optimiert genutzt werden kann, sondern erhöht auch die Fahrersicherheit im Falle eines Unfalls, da das Lenkschloss nicht mehr im Kniebereich des Fahrers angeordnet ist.

Eine solche motorisierte Lenkverrieglungsvorrichtung wird zum Beispiel in den Patentschriften DE 199 06 302 oder DE 199 06 267 im Namen der Anmelderin beschrieben. Solche Lenkverrieglungsvorrichtungen umfassen eine motorisierte Einheit, z.B. einen Elektromotor, welche über eine Getriebeeinheit den Sperrbolzen, der in eine Ausnehmung der Lenksäule zur Verrieglung einfährt, ansteuert.

Um eine einwandfreie Funktionsweise solcher Lenkungsvorrichtungen zu gewährleisteten, müssen die einzelnen Übertragungselemente der Getriebeeinheit beim der Montage der Lenkverrieglungsvorrichtungen gefettet werden.

Jedoch ist die Dosierung der eingebrachten Fettmenge schwierig zu kontrollieren. Zudem kann eine Überdosis an Fett zu negativen Auswirkungen an den elektrischen Elementen der Lenkverrieglungsvorrichtung und zu Fehlfunktionen führen.

Aufgabe der vorliegenden Erfindung ist es eine optimierte Lenkverrieglungsvorrichtung zu schaffen, bei der Reibungskräfte in verringertem Maße auftreten.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die erfindungsgemäße motorisierte Lenkverrieglungseinrichtung kennzeichnet sich dadurch aus, dass die Übertragungselemente zumindest an den jeweiligen Schnittstellen Abtriebsachse / Übertragungselement, Übertragungselement/ Übertragungselement oder Übertragungselement / Sperrbolzen mit einer Gleitbeschichtung versehen sind.

Vorteilhafterweise kann die Gleitschichtung aus reibungsarmen Polytetrafluorethylen besteht.

Bei einer Ausführung kann die Gleitschichtung aus Gleitlack bestehen.

Sehr kostengünstig können die verschiedenen Schnittstellen mit einer aufgespritzten Gleitbeschichtung versehen werden.

Für eine motorisierte Lenkungsverrieglung, welche eine Schnecke und ein Zahnrad mit einer den Sperrbolzen ansteuernden Rampe aufweist, ist es vorteilhaft, wenn die Schnecke (25), das Zahnrad (27) und der Sperrbolzen (5) vollständig mit der Gleitbeschichtung umgeben sind.

Dadurch wird der Montageaufwand einer Lenkverrieglungseinrichtung verringert. Zudem werden der Verschleiß und der Abrieb geringer.

Weitere erfindungsmäßige Merkmale und Vorteile ergeben sich aus den folgenden, anhand von Figuren erläuterten Ausführungsbeispielen. Es zeigen:
- Figur 1 ist eine seitliche Perspektivansicht der wesentlichen Bauteile der erfindungsgemäßen motorisierten Lenkverrieglungsvorrichtung,
- Figur 2 zeigt ein Detail der Figur 1 mit leicht verändertem Perpektivwinkel,
- Figur 3 zeigt eine perspektivische Draufsicht der erfindungsgemäßen Verrieglungseinrichtung,
- Figur 4 zeigt einen Querschnitt durch eine Variante eines erfindungsgemäßen Zahnrades, und
- Figur 5 zeigt eine weitere Fortbildung des Sperrbolzens für die erfindungsgemäße Verrieglungseinrichtung.

Die Erfindung wird im Folgenden anhand der beigefügten Figuren näher beschrieben. In den Figuren werden gleiche Bauteile mit gleichen Referenzzeichen gekennzeichnet.

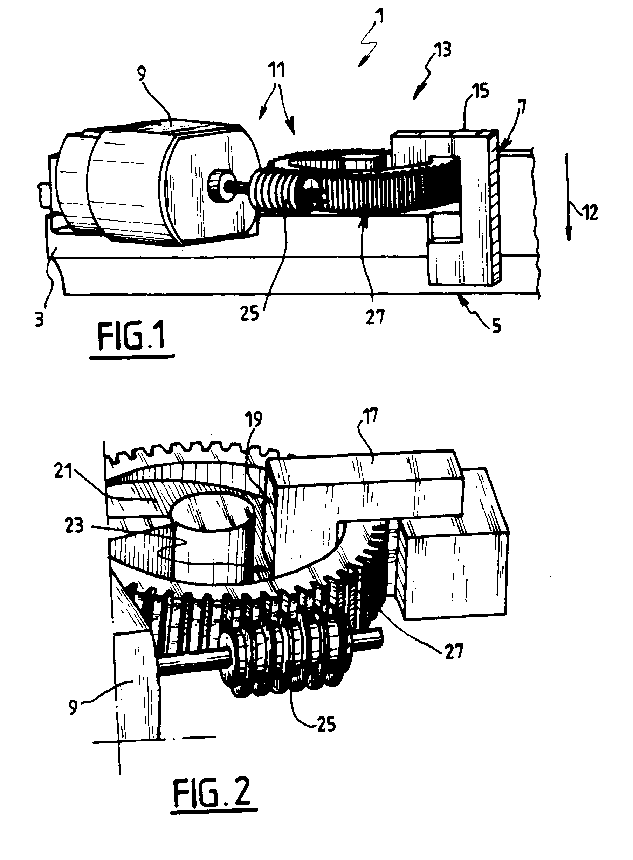

Die Figuren 1 bis 3 zeigen einen Teil einer motorisierten Lenkverrieglungseinrichtung 1 für ein Kraftfahrzeug, welches in einem, nur teilweise dargestellten Gehäuse 3 aufgenommen ist.

Diese Lenkungsverrieglungsvorrichtung umfasst einen Sperrbolzen 5, der in eine entsprechende Ausnehmung an der Lenkspindel (nicht dargestellt in den Figuren) zur Verrieglung des Lenkrads eines Kraftfahrzeugs eingreifen kann. Der Sperrbolzen ist beweglich in einer Führung 7 angeordnet, so dass er eine Translationsbewegung ausführen kann.

Die Bewegung des Sperrbolzens wird, zumindest beim Herausziehen aus der Ausnehmung an der Lenkspindel, das heißt zumindest aus einer die Lenkspindel blockierenden Verrieglungsstellung in eine nicht blockierende Ruhestellung, von einer einen Motor 9 umfassenden Antriebseinheit 11 gesteuert.

Zum Einrasten des Sperrbolzens in die Ausnehmung ist zum Beispiel unterstützend eine nicht dargestellte Feder vorgesehen, welche auf den Sperrbolzen in Richtung (Pfeil 12) der Verrieglungsstellung wirkt.

Der Sperrbolzen 5 weist einen seitlich verlaufenden und parallel zum Sperrbolzen endenden, einteilig mit dem Sperrbolzen gefertigten Fortsatz 13 auf. Vorteilhafterweise wird dieser Fortsatz 13, wie in den Figuren dargestellt, als U-förmig ausgebildetes Ende 15 des Sperrbolzens ausgeführt mit einer quer verlaufenden Basis 17 und einem freien Schenkel 19, der parallel zur Längsrichtung des Sperrbolzens 5 verläuft.

Dieser freie Schenkel 19 kooperiert mit einer durch den Motor 9 angetriebenen Steuerkurve 21, die seitlich zum Sperrbolzen angeordnet ist, um den Lenkbolzen durch eine Hubbewegung von der Verrieglungsstellung in die Ruhestellung zu überführen.

Dabei liegt das freie Ende 23 des Schenkels 19 auf der Steuerkurve 21, wobei der Kontakt durch die nicht dargestellte, auf die Basis 17 wirkende Feder gewährleistet wird.

Vorteilhafterweise wird die Steuerkurve 21 als Rampe ausgeführt.

Wie in den Figuren dargestellt kann die Rampe 21 helixmäßig oder spiralförmig verlaufen und über einen Umfang von weniger als 360° ausgeführt sein.

Sehr effizient und Platz sparend wird die helixförmige Rampe 21 auch dadurch, dass sie im Innenbereich eines vom Motor über eine Schnecke 25 angetriebenen Zahnrads 27 verläuft.

Das Zahnrad 27 ist zum Beispiel aus Kunststoff gefertigt und die helixförmige Rampe im Innenbereich des Zahnrads und das Zahnrad können einteilig ausgeführt sein.

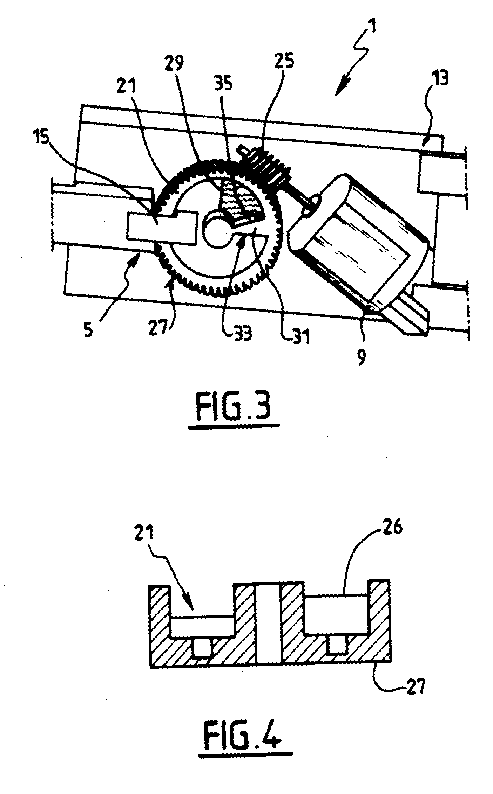

Um jedoch besser einem Reibungsverschleiß vorbeugen zu können ist die helixförmige Rampe 21 im Innenbereich des Zahnrads 27 als ein Einlegeteil 26 ausgeführt, welches in den Innenbereich des Zahnrads 27 eingepasst werden kann (siehe Figur 4). In diesem Fall kann nämlich das Material für das Einlegeteil 26 aus einem härten, reibungsärmeren Material ausgewählt werden.

Um eine Fettung der verschiedenen Übertragungselemente zu vermeiden, ist vorgesehen die Übertragungselemente zumindest an den jeweiligen Schnittstellen Abtriebsachse / Übertragungselement, Übertragungselement/ Übertragungselement oder Übertragungselement / Sperrbolzen mit einer Gleitbeschichtung zu versehen. Als Schnittstelle werden hiermit die Bereiche zweier Übertragungselemente bezeichnet, welche bei Bewegung miteinander im Eingriff stehen.

Im Detail, wären da als Übertragungselemente und betroffene Schnittstellen, das Schneckenrad 25 und der Zahnkranz des Zahnrades 27, das Ende 23 des Fortsatzes 13 des Sperrbolzens 5 zumindest an der Schnittstelle, im Bereich, der im Eingriff mit der Steuerkurve 21 steht, und die Rampe 21.

Die Gleitbeschichtung besteht zum Bespiel aus reibungsarmen Polytetrafluorethylen (Kurzzeichen PTFE), oder eine Reibungskräfte verringernde Kunststoffbeschichtung. Vorzugsweise werden die verschiedenen Übertragungsteile trovalisiert, das heißt, dass die Gleitbeschichtung in einer umlaufenden Trommel aufgebracht wird. Alternativ kann die Gleitbeschichtung auch durch Umspritzen mit einem geeigneten Kunststoff oder Gleitlack aufgebracht werden werden.

Sehr vorteilhaft hat sich erwiesen, das Schneckenrad 25, das Zahnrad 27 und den Sperrbolzen 5 bei der Herstellung völlig mit einer Gleitbeschichtung zu umgeben. Dadurch wird auch bei der Führung und Lagerung der jeweiligen Übertragungsteile ein optimales Ergebnis erzielt.

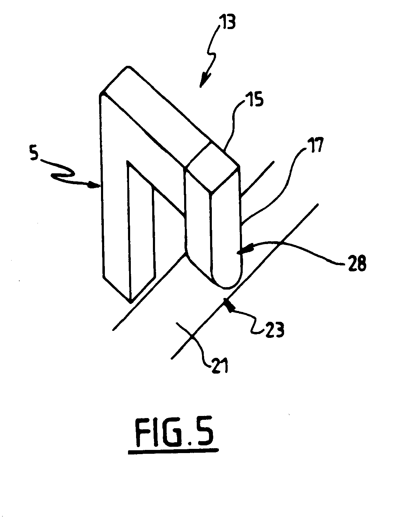

Kombiniert mit solchen Beschichtungen kann vorgesehen sein das Ende des Fortsatzes (Schenkel 19) des Sperrbolzens zumindest im Bereich, der im Eingriff mit der Steuerkurve steht, abzurunden, um Reibungskräfte zu verringern (siehe Figur 5).

Die Rampe kann eine gleichmäßige Steigung aufweisen, um zum Beispiel den Sperrbolzen mit nahezu konstanter Geschwindigkeit zu fahren.

Jedoch wird vorzugsweise vorgesehen, dass der Steigungsbereich der Rampe, der das Herausziehen des Sperrbolzens aus der Ausnehmung an der Lenkspindel in der Anfangsphase bewirkt (siehe schraffierter Bereich 29 in Figur 3), flacher verläuft als die Steigungen der restlichen Rampenbereiche. Damit wird bewirkt, dass die aufzubringende Kraft des Motors 9 beim Herausziehen aus der Ausnehmung der Lenkspindel kleiner ist und dass danach die Geschwindigkeit des Sperrbolzens beim Herausziehen beschleunigt wird, so dass das Verhältnis Kraftaufwand / Dauer des Herausziehvorgangs optimiert werden kann.

Wie in Figur 3 besonders gut ersichtlich, weist die helixförmige Rampe 21 einen sektorförmigen Quersteg 31 auf, dessen eine Seite 33 dem Endanschlag der Ruhestellung und dessen andere Seite 35 dem Endanschlag der Verrieglungsstellung entspricht.

Anstelle des Querstegs 31 kann in diesem Bereich auch eine der übrigen Rampe entgegengesetzte Steigung vorgesehen sein, die dem Sperrbolzen eine Bewegung von der Ruhestellung in die Verrieglungsstellung, bei gleicher Drehrichtung des Zahnrads, ermöglicht. Eine solche Lösung vereinfacht die Steuerung des Motors 9, der nur noch in eine Richtung drehen muss.

Auch andere Ausführungsformen sind im Rahmen des erfindungsgemäßen Konzepts möglich.

Durch die erfindungsgemässen Maßnahmen, wird eine dauerhafte Reibungsverminderung erzielt. Solche Gleitbeschichtungen sind auch abriebfester und temperaturresistenter als konventionelle Schmierfette, so dass auch der Abrieb vermindert wird.

Es ist auch hervorzuheben, dass das Temperaturverhalten solcher Gleitbeschichtungen (z.B. PTFE) wesentlich konstanter im Bereich von -40°C bis 120°C ist, als das herkömmlicher Schmierfette, so dass auch konstantere Reibwerte über den gesamten gängigen Temperaturbereich erzielt werden und somit die vom Motor aufzubringenden Kräfte auch konstanter sind.

Dadurch, dass die Übertragungselemente (Schneckenrad 25, Zahnrad 27 mit Rampe 21 und Sperrbolzen 5) mit einer Gleitbeschichtung vorgefertigt sind, kann die Endmontage der motorisierten Lenkverrieglungsvorrichtung beschleunigt werden, da die umständlichen Fettungsvorgänge wegfallen können.

Man erhält somit eine Lenkverrieglungsvorrichtung mit vereinfachter Endmontage und zuverlässigem Funktionsverhalten über alle, im Automobilbereich vorkommenden Temperaturbereiche.

Natürlich ist die hier beschriebene Funktionsweise der motorisierten Lenkungsverrieglung nur Beispielhaft und der Einsatz von Elementen, die mit einer Gleitbeschichtung umgebenen sind, wie Schneckenrad, von diesem angetriebenen Zahnrad, ein Rampenmechanismus oder eine Nocke, sowie ein zugehöriger Sperrbolzen kann auch bei anderer Bauweise der Lenkungsverrieglung vorteilhaft eingesetzt werden.

## Patentansprüche

1. Motorisierte Lenkverrieglungseinrichtung (1) für ein Kraftfahrzeug umfassend einen Sperrbolzen (5), der in eine entsprechende Ausnehmung an der Lenkspindel zur Verrieglung des Lenkrads eines Kraftfahrzeugs eingreifen kann und eine, einen Motor (9) umfassende Antriebseinheit (11) um den Sperrbolzen (5) zumindest aus einer die Lenkspindel blockierenden Verrieglungsstellung in eine nicht blockierende Ruhestellung zu überführen, wobei die Antriebseinheit Übertragungselemente aufweist, welche die Drehbewegung der Abtriebsachse des Motors in eine Translationsbewegung des Sperrbolzens umsetzen, **dadurch gekennzeichnet, dass** die Übertragungselemente zumindest an den jeweiligen Schnittstellen Abtriebsachse / Übertragungselement, Übertragungselement/Übertragungselement oder Übertragungselement / Sperrbolzen (5) mit einer Gleitbeschichtung versehen sind.

2. Motorisierte Lenkverrieglungseinrichtung nach Anspruch 1, **dadurch gekennzeichnet**, die Gleitschichtung aus reibungsarmen Polytetrafluorethylen besteht.

3. Motorisierte Lenkverrieglungseinrichtung nach Anspruch 1, **dadurch gekennzeichnet**, die Gleitschichtung aus Gleitlack besteht.

4. Motorisierte Lenkverrieglungseinrichtung nach einem des Ansprüche 1 bis 3, **dadurch gekennzeichnet, dass** die Gleitbeschichtung aufgespritzt ist.

5. Motorisierte Lenkverrieglungseinrichtung nach einem des Ansprüche 1 bis 4, welche eine Schnecke (25) und ein Zahnrad (27) mit einer den Sperrbolzen (5) ansteuernden Rampe (21) aufweist, **dadurch gekennzeichnet, dass** die Schnecke (25), das Zahnrad (27) und der Sperrbolzen (5) vollständig mit der Gleitbeschichtung umgeben sind.
